# EUROPÄISCHE PATENTSCHRIFT

(11) **EP 1 837 134 B1**
(45) Veröffentlichungstag und Bekanntmachung des Hinweises auf die Patenterteilung: **16.07.2008**
(21) Anmeldenummer: 06006121.5
(22) Anmeldetag: 24.03.2006
(51) Int. Cl.: B25J 15/06, B65G 47/91, B65G 61/00

(54) **Handhabungsvorrichtung und Verfahren zum Handhaben von Werkstücken**
Manipulator and process for manipulating workpieces
Manipulateur et procédé de manipulation de pièces

(43) Veröffentlichungstag der Anmeldung: 26.09.2007
(73) Patentinhaber: Bargstedt Handlingsysteme GmbH, 21745 Hemmoor (DE)
(72) Erfinder: Peisker, Torsten, 21709 Himmelpforten (DE); Tiedemann, Jörg, 21769 Lamstedt (DE)
(74) Vertreter: HOFFMANN EITLE

(56) Entgegenhaltungen:
- EP-A- 0 585 508
- US-A- 4 547 115
- US-A- 5 993 144

## Beschreibung

### Technisches Gebiet

Die Erfindung betrifft eine Handhabungsvorrichtung für plattenförmige Werkstücke nach dem Oberbegriff von Anspruch 1 sowie ein Handhabungsverfahren, das eine solche Handhabungsvorrichtung einsetzt.

### Stand der Technik

Bei der Herstellung plattenförmiger Werkstücke wie Möbelfronten, Korpusteilen, Arbeitsplatten und dergleichen müssen die Werkstücke zwischen einzelnen Bearbeitungsschritten gehandhabt werden. Zu diesem Zweck sind im Stand der Technik unterschiedliche Handhabungsvorrichtungen bekannt, die in der Lage sind, eines oder mehrere Werkstücke in einer bestimmten Position aufzunehmen und in einer anderen Position abzulegen.

So offenbart beispielsweise die DE 299 13 548 U1 eine Vorrichtung zur Übergabe von Werkstücken. Die Vorrichtung besitzt eine plattenförmige Traverse mit einer Mehrzahl von Vakuumsaugelementen, mittels der die plattenförmigen Werkstücke aufgenommen und verfahren werden können.

Neben der Handhabung spielt auch die Lösung von Verschnitt- und Packungsproblemen ("Nesting") eine große Rolle in der industriellen Praxis. Bei einem Nesting-Problem ist eine Holzwerkstoffplatte (bezeichnet als Unterlage) gegeben, dazu eine Menge geometrischer Objekte (bezeichnet als Schablonen), die beispielsweise Teile eines Möbelstückes darstellen. Diese Schablonen sind nun so auf der vorgegebenen Unterlage zu platzieren, dass der nicht genutzte Teil der Unterlage (bezeichnet als Verschnitt) möglichst gering ist.

Nesting-Prozesse werden mit unterschiedlichsten Bearbeitungsmaschinen ausgeführt, z.B. mit 2-Achsen Drahterodiermaschinen, Lasermaschinen, Plasmaschneider, Wasserstrahlscheider und in der Holzbearbeitung CNC-Stationärbearbeitungsmaschinen.

Eine leistungsfähige Nestingzelle zur Fertigung von Einzelteilen aus einer Rohformatplatte stellt besondere Anforderungen an die Handhabung der Werkstücke. Eine neuartige Aufgabe für Handhabungseinrichtungen von Nestingzellen besteht im sogenannten Picking, dem gezielten Aufnehmen von einzelnen ausgefrästen Werkstücken aus dem sogenannten Nest, der durch Fräsen in Einzelteile aufgeteilten Rohformatplatte, und dem Ablegen der Teile z. B. auf einem Flächentransport. Abhängig von der Werkstückorientierung kann es erforderlich sein, die Werkstücke dabei zu drehen.

Die Handhabung umfasst weiterhin das anfängliche Auflegen von Rohformatplatten und Unterlageplatten (Verschleißplatten) für den Schutz des Bearbeitungstisches vom Stapel auf die Maschine sowie das Entsorgen von abgefrästen Verschleiß- und Schonplatten und von Abfallstücken.

Das Picking lässt sich prinzipiell mit bekannten Saugtraversen durchführen, wie sie beispielsweise in der oben genannten DE 299 13 548 U1 offenbart sind, sofern die Vakuumsaugelemente einzeln ansteuerbar sind. Allerdings hat sich gezeigt, dass diese bekannten Saugtraversen beim Picking (aufgrund ihrer für das Zuführen großer Platten ausgelegten Abmessungen) einen großen Arbeitsraum benötigen und schwerfällig arbeiten. Darüber hinaus ergibt sich je nach Größe und Lage des zu pickenden Einzelteils keine ausreichend sichere Aufnahme desselben an der Saugtraverse.

Ferner offenbart die EP 0 585 508 A1 eine Handhabungsvorrichtung nach dem Oberbegriff von Anspruch 1.

### Darstellung der Erfindung

Es ist daher Aufgabe der Erfindung, eine Handhabungsvorrichtung und ein Handhabungsverfahren der eingangs genannten Art bereitzustellen, welche eine sicherere und gleichzeitig platzsparende Handhabung plattenförmiger Werkstücke mit stark variierenden Abmessungen ermöglichen.

Diese Aufgabe wird erfindungsgemäß durch eine Handhabungsvorrichtung nach Anspruch 1 und ein Handhabungsverfahren nach Anspruch 10 gelöst. Besonders vorteilhafte Weiterbildungen der Erfindung sind in den abhängigen Ansprüchen angegeben.

Der Erfindung liegt der Gedanke zugrunde, das Aufnehmen großformatiger Werkstücke (z. B. beim Beschicken einer Nestingzelle) und das Entnehmen kleinformatiger Werkstücke (z. B. aus der Nestingzelle) funktional zu entkoppeln. Zu diesem Zweck ist bei der erfindungsgemäßen Vorrichtung vorgesehen, dass an der Traverse eine Nebentraverse angeordnet ist, die eine Mehrzahl von Nebenvakuumsaugelementen aufweist, wobei die Nebentraverse in Bezug auf die Traverse in zumindest einer dritten Richtung (X) verfahrbar und um eine Achse (Z) verdrehbar ist.

Da somit das Aufnehmen kleinformatiger Werkstücke bzw. Einzelteile mittels der Nebentraverse erfolgen kann, muss beim Ausrichten der Handhabungsvorrichtung auf das zu "pickende" Einzelteil nicht die gesamte Traverse verfahren, sondern lediglich die Nebentraverse in die gewünschte Position gebracht werden. Auf diese Weise wird der für die erfindungsgemäße Handhabungsvorrichtung benötigte Arbeitsraum beträchtlich vermindert. Ferner kann die Anordnung der Nebentraverse sehr gut an die Lage und Geometrie der jeweiligen Einzelteile angepasst werden, so dass ein sicheres und stabiles Aufnehmen der Einzelteile erreicht wird. Nicht zuletzt lässt sich durch die erfindungsgemäße Handhabungsvorrichtung auch der Verfahrensablauf beschleunigen.

Gemäß einer Weiterbildung der vorliegenden Erfindung sind die Nebenvakuumsaugelemente jeweils einzeln oder in Gruppen unabhängig voneinander und/oder unabhängig von den Vakuumsaugelementen der Traverse mit Unterdruck beaufschlagbar. Hierdurch kann die erfindungsgemäße Handhabungsvorrichtung besonders gut an die jeweilige Geometrie und Lage der zu "pickenden" Einzelheiten angepasst werden.

Die Nebenvakuumsaugelemente können an der Nebentraverse prinzipiell auf unterschiedlichste Art und Weise angeordnet sein. Im Hinblick auf ein sicheres und variables Aufnahmevermögen der erfindungsgemäßen Handhabungsvorrichtung bei einfacher Konstruktion derselben ist gemäß einer Weiterbildung der Erfindung jedoch vorgesehen, dass die Nebenvakuumsaugelemente an der Nebentraverse in mehreren Reihen angeordnet sind. Dabei ist es besonders bevorzugt, dass zumindest zwei der Reihen auf Linien angeordnet sind, die einander schneiden. Hierdurch wird insbesondere erreicht, dass die Nebentraverse in unterschiedlichen Drehpositionen eingesetzt werden kann, was anhand der unten stehenden Beschreibung des erfindungsgemäßen Verfahrens noch besser deutlich werden wird.

Die Verfahrbarkeit der Traverse kann im Rahmen der vorliegenden Erfindung durch vielfältige Konstruktionen erreicht werden. Beispielsweise kann die Traverse auch an einem Knickarmroboter oder dergleichen angebracht werden. Als vorteilhafte Konstruktion mit großer Reichweite und einfachem Aufbau hat sich jedoch eine Führungseinrichtung erwiesen, welche die Gestalt eines Portals oder gegebenenfalls eines Auslegers aufweist.

Um ein präzises und gleichzeitig schnelles Verfahren der Nebentraverse entlang der Traverse zu erreichen, ist gemäß einer Weiterbildung der Erfindung vorgesehen, dass die Nebentraverse mittels eines Linearantriebes entlang der Traverse verfahrbar ist.

Gemäß einer weiteren vorteilhaften Ausgestaltung der vorliegenden Erfindung ist vorgesehen, dass die Vakuumsaugelemente der Traverse und die Nebentraverse in Bezug zueinander in der dritten Richtung (Z) verfahrbar sind. Hierdurch wird beispielsweise ermöglicht, dass die Vakuumsaugelemente der Traverse zurückgefahren werden, wenn diese nicht benötigt werden, sodass das Verfahren und/oder Verdrehen der Nebentraverse während des Pickings durch die Vakuumsaugelemente der Traverse nicht behindert wird.

Obgleich die erfindungsgemäße Handhabungsvorrichtung in den unterschiedlichsten Produktionsanlagen zum Einsatz kommen kann, hat es sich als besonders vorteilhaft erwiesen, die Handhabungsvorrichtung in Kombination mit einem Bearbeitungszentrum zur spanenden Bearbeitung plattenförmiger Werkstücke, die zumindest teilweise aus Holz, Holzwerkstoffen, Kunststoffen oder dergleichen bestehen, einzusetzen. Bei einem solchen Bearbeitungszentrum kann es sich beispielsweise um eine Nestingzelle der eingangs genannten Art handeln. In diesem Falle ermöglicht die erfindungsgemäße Handhabungsvorrichtung eine zügige, sichere und platzsparende Beschickung und Entleerung des Bearbeitungszentrums, sodass sich ein entsprechend vorteilhafter Betrieb der Gesamtkombination ergibt.

Obgleich die erfindungsgemäße Handhabungsvorrichtung prinzipiell auch manuell gesteuert werden kann, ist gemäß einer Weiterbildung der Erfindung vorgesehen, dass sie ferner eine Steuereinrichtung aufweist, in der die Geometrie und Anordnung aufzunehmender plattenförmiger Werkstücke bzw. Einzelteile hinterlegt sind, um den Betrieb der Handhabungsvorrichtung zu steuern. Dabei ist es im Falle einer Kombination der Handhabungsvorrichtung mit einem Bearbeitungszentrum besonders bevorzugt, dass die Steuervorrichtung datenmäßig auch mit dem Bearbeitungszentrum in Verbindung steht. Hierdurch lassen sich beispielsweise die für die Herstellung von Einzelteilen in dem Bearbeitungszentrum zur Verfügung stehenden Daten unmittelbar für die Aufnahme der hergestellten Einzelteile nutzen.

Gemäß einer weiteren Zielrichtung stellt die vorliegende Erfindung ein Verfahren zum Handhaben plattenförmiger Werkstücke gemäß Anspruch 10 bereit. Dieses Verfahren stellt eine besonders vorteilhafte Betriebsweise einer erfindungsgemäßen Handhabungsvorrichtung dar, wie sie oben stehend beschrieben worden ist. Dabei ist erfindungsgemäß insbesondere vorgesehen, dass die Nebentraverse vor dem Aufnehmen des mindestens einen Einzelteils in eine Dreh- und/oder Verfahrposition gebracht wird, die auf die Lage und Geometrie des aufzunehmenden Einzelteils abgestimmt ist. Hierdurch ergibt sich ein besonders sicheres Picking des jeweiligen Einzelteils. Dabei lässt sich die Haltekraft des jeweiligen Einzelteils an der Handhabungsvorrichtung gemäß einer Weiterbildung weiter steigern, indem die Nebentraverse vor dem Aufnehmen des mindestens einen Einzelteils in eine Dreh- und/oder Verfahrposition gebracht wird, in der die Angriffsfläche von Nebenvakuumsaugelementen an dem mindestens einen Einzelteil maximal ist.

### Kurze Beschreibung der Zeichnungen

Fig. 1 zeigt schematisch eine Seitenansicht einer Ausführungsform der erfindungsgemäßen Handhabungsvorrichtung;
Fig. 2 zeigt schematisch eine teilweise Unteransicht der Ausführungsform der erfindungsgemäßen Handhabungsvorrichtung;
Fig. 3 zeigt schematisch verschiedene Stellungen des in Fig. 2 gezeigten Abschnitts;
Fig. 4 zeigt schematisch verschiedene Arbeitspositionen des in Fig. 2 gezeigten Ausschnitts;
Fig. 5 zeigt schematisch weitere Arbeitspositionen des in Fig. 2 gezeigten Ausschnitts in weiter vereinfachter Darstellung.

### Ausführliche Beschreibung bevorzugter Ausführungsformen

Bevorzugte Ausführungsformen der vorliegenden Erfindung werden nachfolgen ausführlich unter Bezugnahme auf die begleitenden Figuren beschrieben.

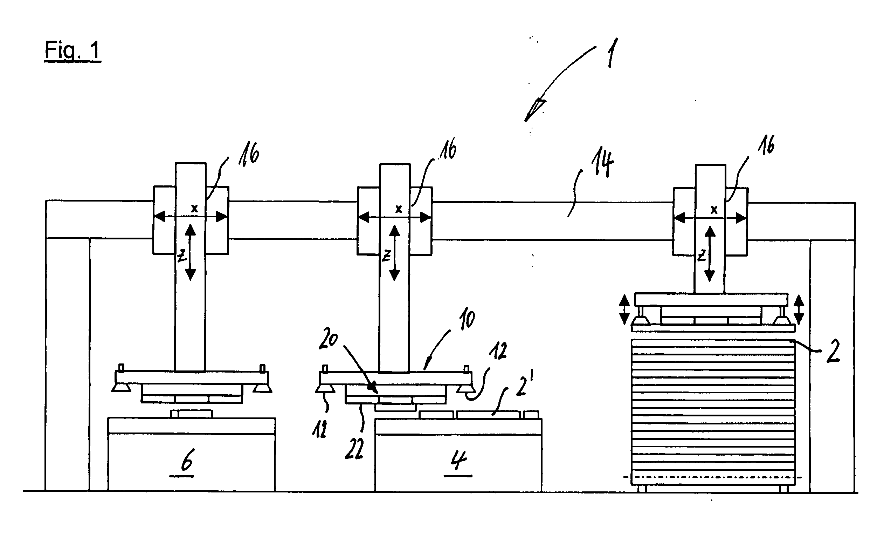

Eine Handhabungsvorrichtung 1 als bevorzugte Ausführungsform der vorliegenden Erfindung ist in Fig. 1 schematisch in einer Seitenansicht gezeigt. Die Handhabungsvorrichtung 1 dient zum Handhaben unterschiedlicher plattenförmiger Werkstücke 2, 2', nämlich einerseits großformatiger plattenförmiger Werkstücke 2, die von einem in Fig. 1 rechts gezeigten Stapel entnommen und auf einem Bearbeitungstisch eines nicht näher gezeigten Bearbeitungszentrums abgelegt werden. Andererseits dient die Handhabungsvorrichtung 1 dazu, Einzelteile 2', die durch das nicht näher gezeigte Bearbeitungszentrum aus der Platte 2 herausgeteilt worden sind, von dem Bearbeitungstisch 4 zu entnehmen und auf einer Fördereinrichtung 6 abzulegen.

Die plattenförmigen Werkstücke können beispielsweise zumindest teilweise aus Holz, Holzwerkstoffen, Kunststoff oder dergleichen bestehen, wie dies häufig im Bereich der Möbel- oder Fußbodenindustrie zum Einsatz kommt.

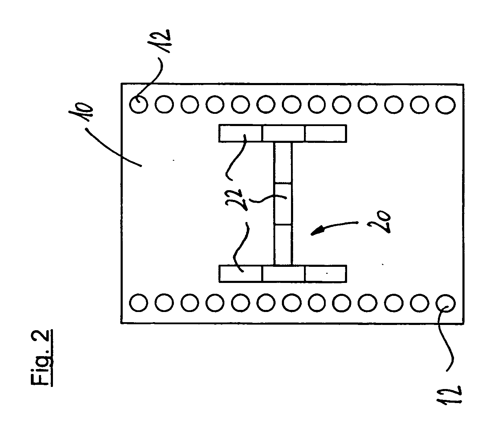

Die Handhabungsvorrichtung 1 umfasst eine flächige Traverse 10, die beispielsweise durch ein plattenförmiges Bauteil oder auch eine fachwerk- bzw. rahmenartige Konstruktion gebildet sein kann. An der Traverse 10 ist eine Mehrzahl von Vakuumsaugelementen 12 angeordnet. Wie in der in Fig. 2 gezeigten teilweisen Unteransicht der Handhabungsvorrichtung 1 zu erkennen ist, sind die Vakuumsaugelemente in der vorliegenden Ausführungsform in zwei Reihen angeordnet, die im Bereich zweier gegenüberliegender Ränder der flächigen Traverse 10 vorgesehen sind.

Die Traverse 10 ist zusammen mit den Vakuumsaugelementen 12 entlang des in Fig. 1 gezeigten Portals 14 in X-Richtung verfahrbar, und ist durch eine ebenso in Fig. 1 schematisch gezeigte Führungseinrichtung 16 in Z-Richtung verfahrbar.

Wie in Fig. 1 und Fig. 2 zu erkennen ist, ist an der Traverse 10 eine Nebentraverse 20 vorgesehen, die beispielsweise nach Art eines verschiebbaren Drehtellers ausgebildet ist, der um eine sich im Wesentlichen senkrecht zur flächigen Erstreckung der Traverse 10 erstreckende Achse (hier: Z) verdrehbar und in einer Richtung im Wesentlichen parallel zur flächigen Erstreckung der Traverse 10 (hier: X) verfahrbar ist. An der Nebentraverse ist, wie in Fig. 2 am besten zu erkennen ist, eine Mehrzahl von Nebenvakuumsaugelementen 22 vorgesehen. Diese Nebenvakuumsaugelemente 22 können prinzipiell baugleich zu den Vakuumsaugelementen 12 sein, können sich jedoch auch in Geometrie, Saugleistung und anderen Eigenschaften von diesen unterscheiden. Dabei können die Nebensaugelemente 22 durch eine nicht näher gezeigte Unterdruckeinrichtung jeweils einzeln oder in Gruppen unabhängig voneinander und auch unabhängig von den Saugelementen 12 mit Unterdruck beaufschlagt werden.

Wie in Fig. 2 am besten zu erkennen ist, sind die Nebenvakuumsaugelemente 22 an der Nebentraverse 20 in mehreren Reihen angeordnet, die in der vorliegenden Ausführungsform nach Art eines "H" angeordnet sind, sodass eine der Reihen die beiden anderen Reihen schneidet. Im Rahmen der vorliegenden Erfindung sind jedoch auch andersartige Anordnungen der Nebenvakuumsaugelemente 22 vorstellbar, wie beispielsweise eine U- oder L-Anordnung, oder jede andere, auch nicht reihenförmige Anordnung.

Die Verfahrbarkeit bzw. Verdrehbarkeit der Nebentraverse 20 an der Traverse 10 kann durch vielfältige bekannte Antriebs- und Führungseinrichtungen erreicht werden, wobei für die Verfahrbarkeit der Nebentraverse ein Linearantrieb bevorzugt ist.

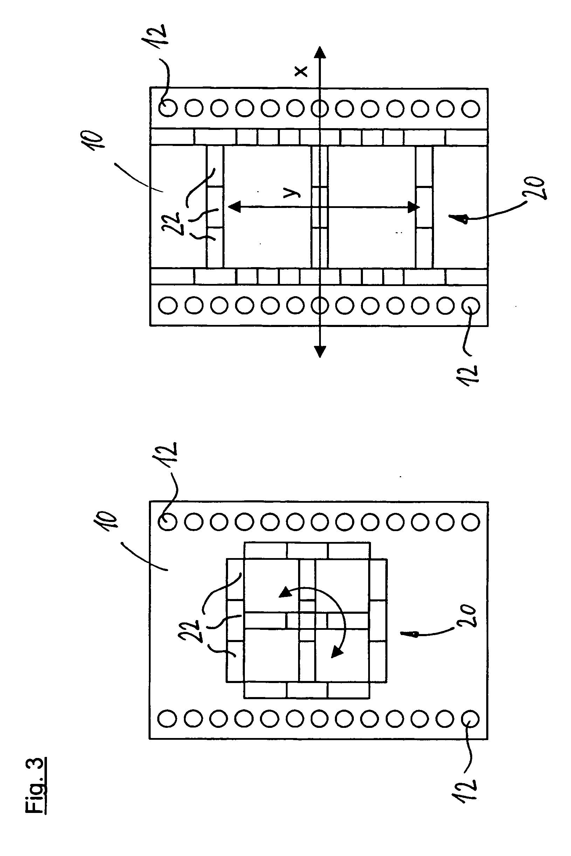

Die sich aus der Verfahrbarkeit bzw. Verdrehbarkeit ergebenden Bewegungsmöglichkeiten der Nebentraverse 20 mit ihren Nebenvakuumsaugelementen 22 in Bezug auf die Traverse 10 sind schematisch in Fig. 3 veranschaulicht, die verschiedene Stellungen des in Fig. 2 gezeigten Ausschnitts zeigt. Die linke Zeichnung in Fig. veranschaulicht ein Verdrehen der Nebentraverse 20 um eine sich im wesentlichen senkrecht zu der Zeichenebene erstreckende Achse (Z), während die rechte Zeichnung in Fig. 3 die Verfahrmöglichkeit der Nebentraverse 20 in Bezug auf die Traverse 10 entlang einer sich in der Zeichenebene erstreckenden Achse (Y) veranschaulicht. Darüber hinaus ist die gesamte Einheit aus Traverse 10 und Nebentraverse 20 entlang des in FIg. 1 gezeigten Portals 14 in X-Richtung und entlang der in Fig. 1 gezeigten Führung 16 in Z-Richtung verfahrbar.

Um eine Kollision der Nebentraverse 20 mit den Vakuumsaugelementen 12 der Traverse 10 beim Verfahren bzw. Verdrehen der Nebentraverse 20 zu vermeiden, ist bei der vorliegenden Ausführungsform vorgesehen, dass die Saugelemente 12 in Bezug auf die Traverse 10 und somit auch in Bezug auf die Nebentraverse 20 verfahrbar sind, und zwar in eine Richtung im wesentlichen senkrecht zur flächigen Erstreckung der Traverse 10. Zu diesem Zweck können ebenfalls bekannte Führungs- und Antriebsmittel vorgesehen sein.

Obgleich in den Figuren nicht gezeigt, umfasst die Handhabungsvorrichtung 1 ferner eine Steuervorrichtung, beispielsweise in Form eines Steuercomputers. In der Steuereinrichtung sind die Geometrie und die Anordnung aufzunehmender plattenförmiger Werkstücke 2 bzw. Einzelteile 2' hinterlegt, sodass der Betrieb der Handhabungsvorrichtung 1 vollautomatisch gesteuert werden kann. Dabei ist es besonders bevorzugt, dass die Steuervorrichtung datenmäßig auch mit dem hier nicht näher gezeigten Bearbeitungszentrum in Verbindung steht, sodass insbesondere die Daten über die Geometrie und Anordnung der Einzelteile 2' unmittelbar verfügbar sind.

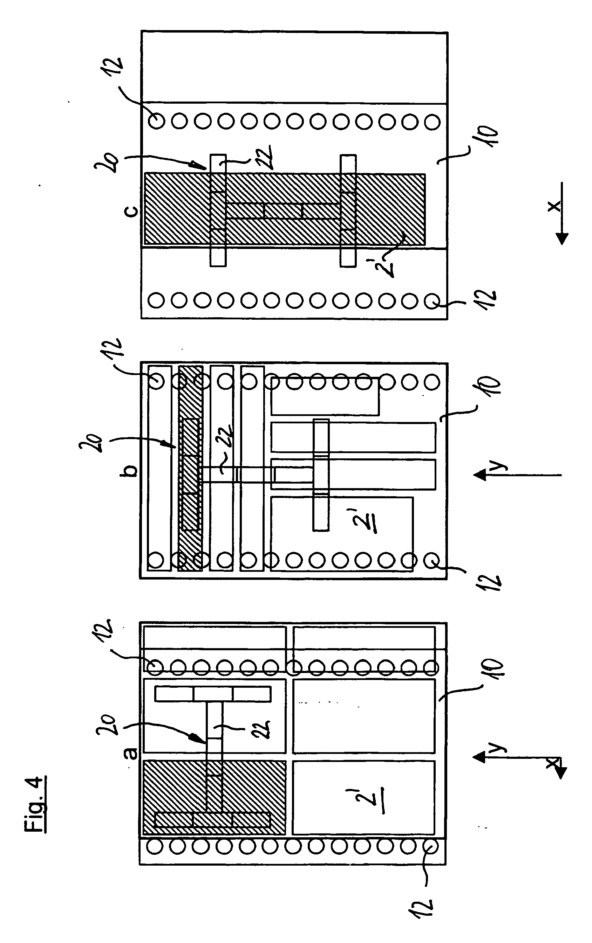

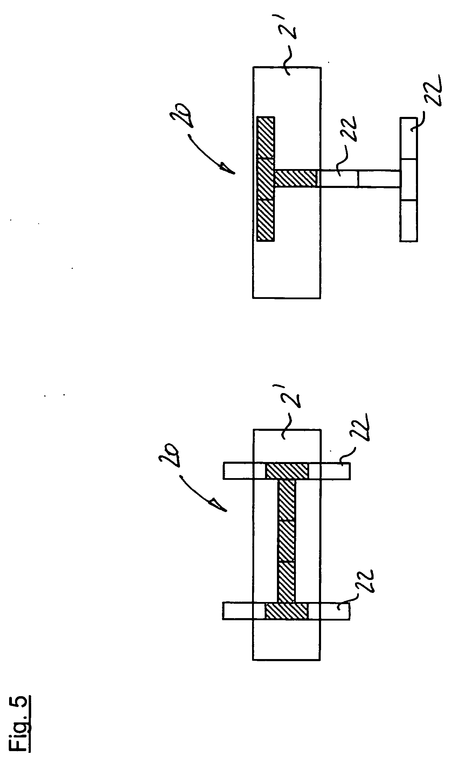

Der Betrieb der erfindungsgemäßen Vorrichtung bzw. das erfindungsgemäße Verfahren werden nachfolgend unter Bezugnahme auf die Figuren 4 und 5 beschrieben, die verschiedene Arbeitspositionen von Teilen der erfindungsgemäßen Handhabungsvorrichtung zeigen. In Fig. 4 sind die Traverse 10 und die Nebentraverse 20 mit ihren (Neben)-Vakuumsaugelementen 12, 22 in verschiedenen Positionen oberhalb eines "Nests" von Einzelteilen 2' gezeigt. Das gerade aufzunehmende Einzelteil ist in Fig. 4 jeweils schraffiert dargestellt. Ferner ist in Fig. 4 unterhalb der Zeichnungen durch Pfeile jeweils der Verfahrweg der Nebentraverse (Y) bzw. Traverse (X) angeben, um in eine gewünschte Position zum Aufnehmen des schraffiert dargestellten Einzelteils zu kommen. Das schraffiert gezeigte Einzelteil wird dann durch Nebenvakuumsaugelemente 22 aufgenommen, deren Projektion vollständig innerhalb des schraffiert dargestellten Einzelteils liegt. Dieses wird dann durch Verfahren der gesamten Einheit aus Traverse 10 und Nebentraverse 20 auf der in Fig. 1 gezeigten Fördereinrichtung 6 abgelegt, um anschließend das nächste Einzelteil 2' des Nests aufzunehmen.

Vor dem Ausrichten der Handhabungsvorrichtung 1 auf das nächste "zu pickende" Einzelteil 2' wird in der nicht näher gezeigten Steuereinrichtung die optimale Dreh- und/oder Verfahrposition der Nebentraverse 20 und gegebenenfalls auch der Traverse 10 bestimmt. Zu diesem Zweck führt die Steuereinrichtung einen Algorithmus aus, der anhand von Fig. 5 näher erläutert wird. Bei diesem Algorithmus berechnet die Steuereinrichtung für verschiedene Dreh- und/oder Verfahrpositionen die maximale Schnittflächen zwischen dem zu pickenden Einzelteil 2' und der Projektion von Nebenvakuumsaugelementen, die vollständige innerhalb des Einzelteils 2' liegen. Fig. 5 zeigt zwei mögliche Stellungen der Nebenvakuumsaugelemente 22 der Nebentraverse 20, die von der Steuereinrichtung beispielsweise überprüft werden können.

Bei der in Fig. 5 links dargestellten Zeichnung ist die Nebentraverse 20 gegenüber ihrer in Fig. 2 gezeigten Ausgangsstellung lediglich um einen nicht näher gezeigten Betrag Y verfahren, sodass insgesamt fünf Nebenvakuumsaugelemente 22 mit ihrer Projektion innerhalb des Einzelteils 2' liegen, wie durch die Schraffur in der Figur gezeigt.

Bei der in Fig. 5 rechts gezeigten Zeichnung wurde die Nebentraverse 20 aus ihrer in Fig. 2 gezeigten Ausgangsstellung um 90° gedreht, sodass insgesamt vier (ebenfalls schraffiert dargestellte) Nebenvakuumsaugelemente 22 mit ihrer Projektion innerhalb des Einzelteils 2' zum Liegen kommen .

Unter Berücksichtigung der Saugflächen der Nebenvakuumsaugelemente 22' berechnet die Steuereinrichtung nun die maximale Kontaktfläche zwischen den Nebenvakuumsaugelementen 22, der Nebentraverse 20 und dem Einzelteil 2'. Da in der vorliegenden Ausführungsform die Nebenvakuumsaugelemente 22 im Wesentlichen dieselbe Saugfläche besitzen, wählt die Steuereinrichtung die in Fig. 5 links gezeigte Dreh- bzw. Verfahrposition der Nebentraverse 20 aus. Auf der Grundlage dieser Auswahl wird das betreffende Einzelteil 2' aufgenommen, und der Algorithmus wird für das darauf folgende Einzelteil 2' entsprechend wiederholt.

## Patentansprüche

1. Handhabungsvorrichtung (1) für plattenförmige Werkstücke (2, 2'), mit einer flächigen Traverse (10), die eine Mehrzahl von Vakuumsaugelementen (12) aufweist und zumindest in einer ersten (X) und einer zweiten (Z) Richtung verfahrbar ist, wobei
an der Traverse (10) eine Nebentraverse (20) vorgesehen ist, die eine Mehrzahl von Nebenvakuumsaugelementen (22) aufweist,
**dadurch gekennzeichnet, dass** die Nebentraverse (20) in Bezug auf die Traverse (10) in zumindest einer dritten Richtung (X) verfahrbar und um eine Achse (Z) verdrehbar ist.

2. Handhabungsvorrichtung nach Anspruch 1, **dadurch gekennzeichnet, dass** die Nebenvakuumsaugelemente (22) jeweils einzeln oder in Gruppen unabhängig voneinander und/oder unabhängig von den Vakuumsaugelementen (12) mit Unterdruck beaufschlagbar sind.

3. Handhabungsvorrichtung nach Anspruch 1 oder 2, **dadurch gekennzeichnet, dass** die Nebenvakuumsaugelemente (22) an der Nebentraverse (20) in mehreren Reihen angeordnet sind.

4. Handhabungsvorrichtung nach Anspruch 3, **dadurch gekennzeichnet, dass** zumindest zwei der Reihen auf Linien angeordnet sind, die einander schneiden.

5. Handhabungsvorrichtung nach einem der vorhergehenden Ansprüche, **dadurch gekennzeichnet, dass** sie ferner eine Führungseinrichtung (14), insbesondere ein Portal, aufweist, entlang der die Traverse (10) verfahrbar ist.

6. Handhabungsvorrichtung nach einem der vorhergehenden Ansprüche, **dadurch gekennzeichnet, dass** die Nebentraverse (20) mittels eines Linearantriebes entlang der Traverse (10) verfahrbar ist.

7. Handhabungsvorrichtung nach einem der vorhergehenden Ansprüche, **dadurch gekennzeichnet, dass** die Vakuumsaugelemente (12) der Traverse (10) und die Nebentraverse (20) in Bezug zueinander in der dritten Richtung (Z) verfahrbar sind.

8. Handhabungsvorrichtung nach einem der vorhergehenden Ansprüche, in Kombination mit einem Bearbeitungszentrum zur spanenden Bearbeitung plattenförmiger Werkstücke, die zumindest teilweise aus Holz, Holzwerkstoffen, Kunststoffen oder dergleichen bestehen.

9. Handhabungsvorrichtung nach einem der vorhergehenden Ansprüche, **dadurch gekennzeichnet, dass** sie ferner eine Steuereinrichtung aufweist, in der die Geometrie und Anordnung aufzunehmender plattenförmiger Werkstücke (2) bzw. Einzelteile (2') hinterlegt sind, um den Betrieb der Handhabungsvorrichtung zu steuern, wobei die Steuervorrichtung bevorzugt datenmäßig auch mit dem Bearbeitungszentrum in Verbindung steht.

10. Verfahren zum Handhaben plattenförmiger Werkstücke (2, 2') unter Einsatz einer Handhabungsvorrichtung (1) nach einem der vorhergehenden Ansprüche, mit den Schritten:
Zerteilen eines plattenförmigen Werkstücks (1), das bevorzugt zumindest teilweise aus Holz, Holzwerkstoffen, Kunststoffen oder dergleichen besteht, in eine Mehrzahl von Einzelteilen (2'),
Aufnehmen mindestens eines Einzelteils (2') mittels der Handhabungsvorrichtung (1), wobei das mindestens eine Einzelteil (2') durch Nebenvakuumsaugelemente (22) aufgenommen wird, und
die Nebentraverse (20) vor dem Aufnehmen des mindestens einen Einzelteils (2') in eine Dreh- und/oder Verfahrposition gebracht wird, die auf die Lage und Geometrie des aufzunehmenden Einzelteils (2') abgestimmt ist.

11. Verfahren nach Anspruch 10, **dadurch gekennzeichnet, dass** die Nebentraverse (20) vor dem Aufnehmen des mindestens einen Einzelteils (2') in eine Dreh- und/oder Verfahrposition gebracht wird, in der die Angriffsfläche von Nebenvakuumsaugelementen (22) an dem mindestens einen Einzelteil (2') maximal ist.

## Claims

1. Handling device (1) for plate-shaped work pieces (2, 2'), having a two-dimensional crossbar (10) which has a plurality of vacuum suction elements (12) and is movable at least in a first (X) and a second (Z) direction,
an auxiliary crossbar (20) which has a plurality of auxiliary vacuum suction elements (22) being provided on the crossbar (10),
**characterised in that** the auxiliary crossbar (20) in relation to the crossbar (10) is movable in at least a third direction (X) and rotatable about an axis (Z).

2. Handling device according to claim 1, **characterised in that** the auxiliary vacuum suction elements (22) are subjected to a vacuum in each case individually or in groups independently of each other and/or independently of the vacuum suction elements (12).

3. Handling device according to claim 1 or 2, **characterised in that** the auxiliary vacuum suction elements (22) are arranged in several rows on the auxiliary crossbar (20).

4. Handling device according to claim 3, **characterised in that** at least two of the rows are arranged on lines which intersect each other.

5. Handling device according to any of the preceding claims, **characterised in that** it further has a guide device (14), in particular a portal, along which the crossbar (10) is movable.

6. Handling device according to any of the preceding claims, **characterised in that** the auxiliary crossbar (20) is movable along the crossbar (10) by means of a linear drive.

7. Handling device according to any of the preceding claims, **characterised in that** the vacuum suction elements (12) of the crossbar (10) and the auxiliary crossbar (20) are movable in relation to each other in the third direction (Z).

8. Handling device according to any of the preceding claims, in combination with a machining centre for the machining of plate-shaped work pieces which are at least partially made of wood, wood materials, plastics or the like.

9. Handling device according to any of the preceding claims, **characterised in that** it further has a control device in which the geometry and arrangement of plate-shaped work pieces (2) or component parts (2') to be picked up are deposited in order to control operation of the handling device, the control device preferably also being connected to the machining centre in relation to data.

10. Method for the handling of plate-shaped work pieces (2, 2') using a handling device (1) according to any of the preceding claims, with the steps of:
dividing a plate-shaped work piece (1) which is preferably at least partially made of wood, wood materials, plastics or the like, into a plurality of component parts (2'),
picking up at least one component part (2') by means of the handling device (1),
the at least one component part (2') being picked up by auxiliary vacuum suction elements (22), and
the auxiliary crossbar (20) before picking up the at least one component part (2') being moved into a rotational and/or displacement position which is adjusted to the position and geometry of the component part (2') to be picked up.

11. Method according to claim 10, **characterised in that** the auxiliary crossbar (20) before picking up the at least one component part (2') is moved into a rotational and/or displacement position in which the area of application of auxiliary vacuum suction elements (22) to the at least one component part (2') is maximal.

## Revendications

1. Dispositif de manipulation (1) pour des pièces à oeuvrer (2, 2') en forme de plaques, comprenant une traverse aplatie (10) qui comprend une pluralité d'éléments aspirateurs à vide (12) et qui est déplaçable au moins dans une première direction (X) et dans une seconde direction (Z), dans lequel
une traverse annexe (20) est prévue sur la traverse (10), laquelle comprend une pluralité d'éléments aspirateurs à vide (22) annexes,
**caractérisé en ce que** la traverse annexe (20) est déplaçable dans au moins une troisième direction (X) et capable de tourner autour d'un axe (Z) par rapport à la traverse (10).

2. Dispositif de manipulation selon la revendication 1, **caractérisé en ce que** les éléments aspirateurs à vide (22) annexes peuvent être mis sous dépression respectivement individuellement ou par groupes indépendamment les uns des autres et/ou indépendamment des éléments aspirateurs à vide (12).

3. Dispositif de manipulation selon la revendication 1 ou 2, **caractérisé en ce que** les éléments aspirateurs à vide (22) annexes sont agencés en plusieurs rangées sur la traverse annexe (20).

4. Dispositif de manipulation selon la revendication 3, **caractérisé en ce qu'**au moins deux des rangées sont agencées sur des lignes qui se recoupent mutuellement.

5. Dispositif de manipulation selon l'une des revendications précédentes, **caractérisé en ce qu'**il comprend en outre un système de guidage (14), en particulier un portique, le long duquel la traverse (10) est déplaçable.

6. Dispositif de manipulation selon l'une des revendications précédentes, **caractérisé en ce que** la traverse annexe (20) est déplaçable le long de la traverse (10) au moyen d'un entraînement linéaire.

7. Dispositif de manipulation selon l'une des revendications précédentes, **caractérisé en ce que** les éléments aspirateurs à vide (12) de la traverse (10) et la traverse annexe (20) sont déplaçables dans la troisième direction (Z) les uns par rapport à l'autre.

8. Dispositif de manipulation selon l'une des revendications précédentes, en combinaison avec un centre d'usinage pour l'usinage avec enlèvement de matière de pièces à oeuvrer en forme de plaques qui sont constituées au moins partiellement en bois, en matériau à base de bois, en matière plastique, ou similaires.

9. Dispositif de manipulation selon l'une des revendications précédentes, **caractérisé en ce qu'**il comprend en outre un système de commande dans lequel sont mémorisés la géométrie et l'agencement de pièces à oeuvrer (2) ou de pièces individuelles (2') en forme de plaques et destinées à être prises, afin de commander le fonctionnement du dispositif de manipulation, ledit système de commande étant de préférence en liaison également avec le centre d'usinage pour ce qui concerne les données.

10. Procédé pour la manipulation de pièces à oeuvrer (2, 2') en forme de plaques en utilisant un dispositif de manipulation (1) selon l'une des revendications précédentes, comprenant les étapes suivantes :
subdivision d'une pièce à oeuvrer (1) en forme de plaque, constituée de préférence au moins partiellement en bois, en matériau à base de bois, en matière plastique ou similaire, en une pluralité de pièces individuelles (2'),
prise d'au moins une pièce individuelle (2') au moyen du dispositif de manipulation (1), dans lequel
ladite au moins une pièce individuelle (2') est prise par des éléments aspirateurs à vide (22) annexes, et
la traverse annexe (20) est amenée, avant la prise de ladite au moins une pièce individuelle (2'), dans une position de rotation et/ou de déplacement qui est accordée à la position et à la géométrie de la pièce individuelle (2') à prendre.

11. Procédé selon la revendication 10, **caractérisé en ce que** la traverse annexe (20) est amenée, avant la prise de ladite au moins une pièce individuelle (2'), dans une position de rotation et/ou de déplacement dans laquelle la surface d'engagement des éléments aspirateurs à vide (22) annexes au niveau de ladite au moins une pièce individuelle (2') est maximum.
